(19) Europäisches Patentamt
European Patent Office
Office européen des brevets

(11) **EP 2 007 957 B1**

(12) **FASCICULE DE BREVET EUROPEEN**

(45) Date de publication et mention de la délivrance du brevet:
**20.09.2017 Bulletin 2017/38**

(21) Numéro de dépôt: **07727953.7**

(22) Date de dépôt: **10.04.2007**

(51) Int Cl.:
***E05B 17/04*** *(2006.01)*

(86) Numéro de dépôt international:
**PCT/EP2007/053485**

(87) Numéro de publication internationale:
**WO 2007/116073 (18.10.2007 Gazette 2007/42)**

(54) **AGENCEMENT DE TRANSMISSION DE MOUVEMENT ENTRE NOTAMMENT UN VERROU ET UNE SERRURE DE PORTE DE VEHICULE**

ANORDNUNG ZUR ÜBERTRAGUNG VON BEWEGUNG ZWISCHEN INSBESONDERE EINER FAHRZEUGTÜRFALLE UND EINEM FAHRZEUGTÜRSCHLOSS

ARRANGEMENT FOR TRANSMITTING MOVEMENT BETWEEN, IN PARTICULAR, A VEHICLE DOOR CATCH AND LOCK

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **11.04.2006 FR 0651324**

(43) Date de publication de la demande:
**31.12.2008 Bulletin 2009/01**

(73) Titulaire: **U-Shin France**
**94000 Créteil (FR)**

(72) Inventeurs:
• **FLANDRINCK, Christian**
**94042 Creteil Cedex (FR)**
• **GUERIN, Anthony**
**94042 Creteil Cedex (FR)**

(74) Mandataire: **Gaillarde, Frédéric F. Ch. et al**
**Cabinet Germain & Maureau**
**31-33, rue de la Baume**
**75008 Paris (FR)**

(56) Documents cités:
**EP-A- 1 580 358       EP-A1- 0 943 759**
**DE-A1- 4 319 295     FR-A1- 2 849 885**

**Description**

L'invention concerne un procédée de fabrication d'un agencement de transmission de mouvement entre un organe rotatif de sortie tel qu'un verrou d'un véhicule automobile et un organe rotatif d'entrée d'un mécanisme telle qu'une serrure de véhicule automobile du type comprenant un dispositif de transmission de mouvement interposé entre les deux organes rotatifs et comportant un arbre de transmission dont les deux extrémités constituent avec les organes rotatifs de sortie et d'entrée des joints de transmission articulés autorisant un désalignement axial, chaque extrémité présentant la forme générale d'une rotule coopérant avec une partie d'organe rotatif complémentaire.

Un agencement de transmission de ce type est connu par le brevet européen EP0943759. La figure 1 représente la partie de l'agencement qui est intéressant dans le cadre de l'invention. Sur cette figure, l'organe rotatif de sortie est désigné par la référence 1, l'organe rotatif d'entrée du mécanisme de serrure par la référence 2 et l'arbre de transmission du mouvement de l'organe de sortie 1 à l'organe d'entrée 2 par la référence 3. L'extrémité 4 de l'arbre 2, destinée à s'engager dans l'organe rotatif de sortie 2 est retenue dans l'organe 1 par une tige cylindrique d'articulation 6 traversant un orifice radial 7 de l'organe 1 et une fente diamétrale 8 se rétrécissant de chaque côté de la périphérie vers le centre. L'autre extrémité de l'arbre de transmission 3 comporte également une tête de forme générale sphérique 9 pourvue de deux tenants diamétralement en saillis 10 et destinés à s'engager dans des fentes axiales 11 complémentaires de l'organe d'entrée 2 du mécanisme de serrure.

Cet agencement connu présente l'inconvénient de présenter une structure relativement complexe et surtout de nécessiter pour l'établissement du joint pivotant entre l'organe de sortie 1 et l'arbre de transmission 3 une pièce séparée, à savoir l'axe 6, impliquant, de plus, une opération d'assemblage supplémentaire. De plus, cet agencement connu nécessite deux arbres de transmission différents pour les portes gauche et droite.

L'invention a pour but de proposer un procédée de fabrication d'un agencement qui pallie les inconvénients qui viennent d'être énoncés.

Pour atteindre ce but, un procédée de fabrication d'un agencement selon la revendication 1 est proposé.

- la figure 1 est une vue en perspective, schématique, d'un agencement transmission de mouvement entre un verrou et une serrure d'une porte de véhicule automobile, selon l'état de la technique ;
- la figure 2 est une vue en perspective d'un agencement selon l'invention, la partie de la serrure étant omise ;
- les figures 3 et 4 sont des vues schématiques illustrant la rotule-cardan du côté serrure par rapport au verrou respectivement pour la porte gauche et la porte droite,

- les figures 5 et 6 sont des vues en perspective de l'agencement selon l'invention dans une vue selon la flèche V, de la figure 2, respectivement pour la porte gauche et la porte droite,
- la figure 7 est une vue schématique illustrant la façon de calculer le nombre de facettes d'une rotule-cardan à facettes selon l'invention.

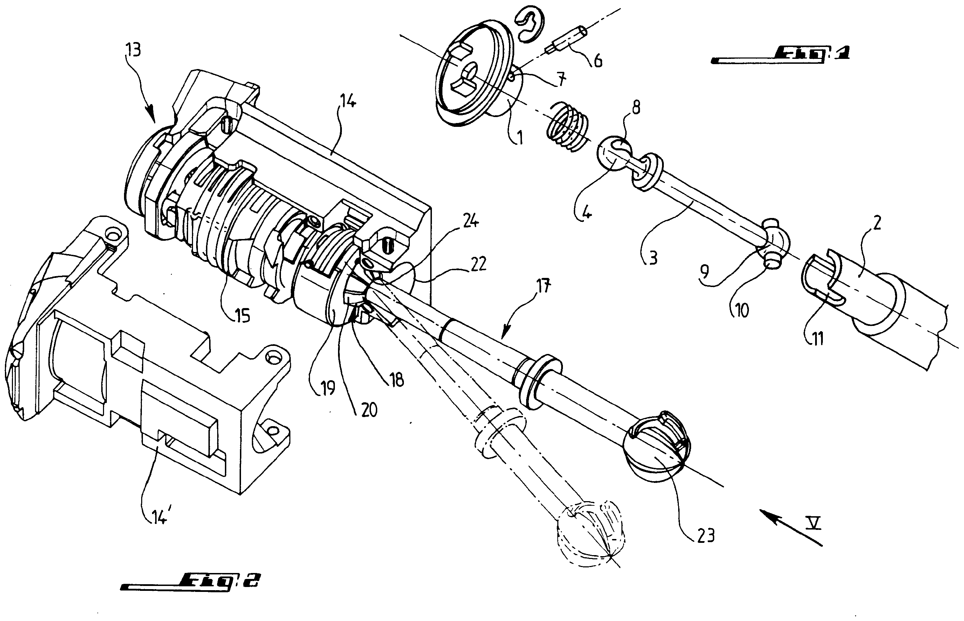

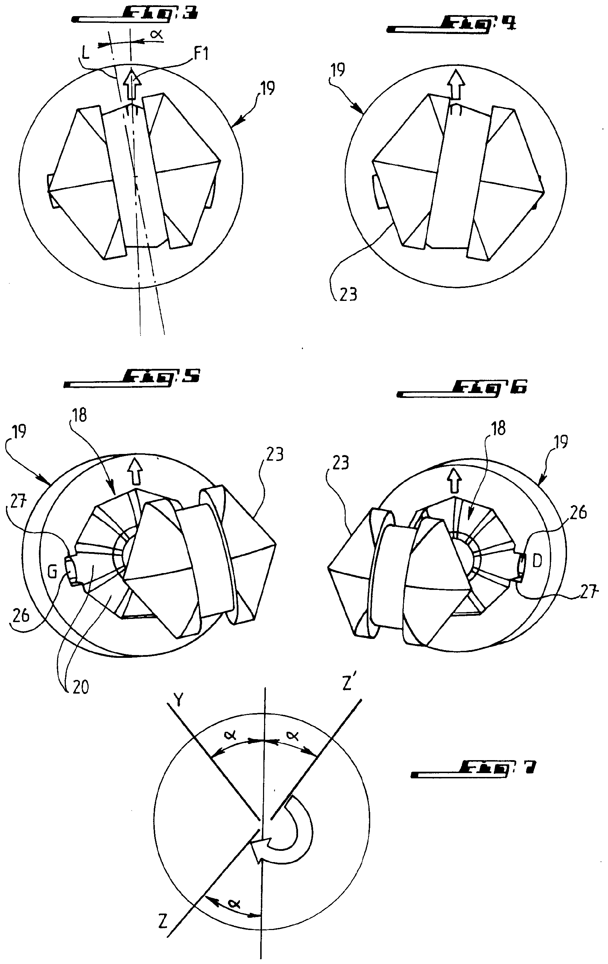

Sur la figure 2 qui illustre un agencement de transmission de mouvement entre un verrou et une serrure d'une porte d'un véhicule automobile, la référence 13 désigne un mécanisme de verrou comportant un stator en deux parties assemblables 14, 14' et un ensemble barillet 15, la référence 17 désigne l'arbre de transmission des mouvements du verrou à la serrure (non représentée). Les deux extrémités de l'arbre 17 destinées à coopérer avec le verrou et la serrure sont réalisées sous forme de rotules à facettes 18, 22, la rotule 18 côté verrou constituant un cardan engagé dans un embout de cardan de forme complémentaire 19. Le cardan à facettes 18 est configuré de façon à ne permettre que deux positions de montage pour éviter tout risque d'erreur de montage. Le dispositif de détrompage prévu à cette fin comporte, dans l'exemple représenté, un tenon ou ergot 26 en saillie sur une facette 20 du cardan et deux rainures appropriées 27, dans la face interne également facettée de l'embout cardan 19, l'ergot étant destiné à s'engager dans l'une ou l'autre des deux nervures. Les figures 5 et 6 illustrent le montage d'un même agencement de transmission sur une porte gauche et une porte droite, comme l'indique les lettres G et D.

En se référant à la figure 7, on décrit ci-après une méthode d'établissement du nombre de facettes du cardan 18 pour obtenir à la fois l'angle $\alpha$ souhaité entre le verrou et la serrure et l'utilisation du même agencement sur la porte droite et la porte gauche du véhicule. Les lignes Y et Z' sur la figure 7 indiquent respectivement les positions "verrou à droite" et "verrou à gauche". Pour assurer cette même utilisation, on prolonge diamétralement la ligne Z' donnant la ligne Z délimitant avec la ligne verticale également l'angle $\alpha$. On obtient pour le nombre de facettes C entre les deux lignes Y et Z, du côté gauche de la ligne verticale et l'angle A d'une facette, la relation :

$$180 - 2\alpha = C \times A$$

En considérant B le nombre de facettes de l'autre côté et N le nombre de facettes total, on peut formuler le système d'équations suivant :

$$180 - 2\alpha = C \times A$$

$$N = C + B$$

$$N \times A = 360°$$

$$B > C$$

N, C et B étant des nombres entiers avec N le plus faible possible.

A titre d'exemple, en appliquant ces équations, on obtient pour un angle $\alpha$ = 10° imposé par le véhicule les valeurs C = 4, A = 40°, B = 5 et N = 9.

Il ressort de la description qui vient d'être faite, que l'invention permet de ne réaliser qu'un seul cardan utilisable à la fois pour des portes gauche et droite, ce qui permet de supprimer des pièces supplémentaires, comme le montre la comparaison de la figure 2 à la figure 1 illustrant l'état de la technique.

Ci-avant l'invention a été décrite à titre d'exemple dans son application à des véhicules automobiles. Or, l'invention est utilisable dans tous les cas où le problème correspond à celui qui vient d'être invoqué en relation avec les véhicules automobiles.

**Revendications**

1. Procédée de fabrication d'un agencement de transmission de mouvement entre un organe rotatif de sortie tel qu'un verrou de porte de véhicule automobile et un organe rotatif d'entrée d'un mécanisme tel qu'une serrure de porte de véhicule automobile, du type comprenant un dispositif de transmission de mouvement interposé entre les deux organes rotatifs et comportant un arbre de transmission dont les deux extrémités constituent avec les organes rotatifs de sortie et d'entrée des joints de transmission articulés autorisant un désalignement axial, chaque extrémité présentant la forme générale d'une rotule coopérant avec une partie d'organe rotatif complémentaire, la rotule (18) côté verrou de l'arbre de transmission (17) étant une rotule à facettes (20) **caractérisé en ce qu'**il comprend les étapes :

   - déterminer l'angle $\alpha$ entre le verrou (13) et la serrure,
   - obtenir le nombre de facettes N de la rotule à partir de la formule :

     - 180-2a=CxA
     - N = C + B
     - N x A = 360°
     - B > C

   Où

   C est le nombre de facettes dans la portion angulaire 2$\alpha$

   B est le nombre de facettes complémentaire à C.
   A est l'angle d'une facette
   $\alpha$ est l'angle entre le verrou et la serrure.
   N, C et B sont des entiers.

2. Procédé selon la revendication 1, **caractérisé en ce qu'**il comporte des moyens permettant l'utilisation du même dispositif de transmission pour des portes droite et gauche du véhicule.

3. Procédé selon la revendication 2, **caractérisé en ce que** le moyen précité réside dans le choix du nombre de facettes (20).

4. Procédé selon l'une des revendications 2 ou 3, **caractérisé en ce que** le nombre de facettes est déterminé en fonction de l'angle ($\alpha$) entre le verrou et la serrure et le fait d'utilisation du même mécanisme de transmission pour les portes gauche et droite,

5. Procédé selon l'une des revendications 1 à 4, **caractérisé en ce qu'**il comprend un dispositif de détrompage (26, 27) du montage sur les portes gauche et droite du véhicule.

6. Procédé selon la revendication 5, **caractérisé en ce que** le dispositif de détrompage comporte un ergot (26) en saillie d'une facette (20) de la rotule à facettes (18) et deux rainures (27) dans la face de l'embout de réception de la rotule coopérant avec cette dernière, l'ergot étant destiné à s'engager dans l'un ou l'autre des deux rainures.

**Patentansprüche**

1. Verfahren zur Herstellung einer Bewegungsübertragungsanordnung zwischen einem sich drehenden Ausgangselement, wie einem Kraftfahrzeug-Türriegel und einem sich drehenden Eingangselement eines Mechanismus, wie einem Kraftfahrzeug-Türschloss, in der Art eine Bewegungsübertragungsvorrichtung umfassend, die zwischen den beiden sich drehenden Elementen angeordnet ist, und eine Antriebswelle umfassend, deren beiden Enden mit den sich drehenden Ausgangs- und Eingangselementen gelenkige Antriebsverbindungen bilden, die einen axialen Versatz erlauben, wobei jedes Ende die allgemeine Form eines Kugelgelenks aufweist, das mit einem ergänzenden Abschnitt eines sich drehenden Elements zusammenwirkt, wobei das Kugelgelenk (18) auf Seiten des Riegels der Antriebswelle (17) ein Facetten-Kugelgelenk (20) ist, **dadurch gekennzeichnet, dass** es die Schritte umfasst:

   - Bestimmen des Winkels $\alpha$ zwischen dem Riegel (13) und dem Schloss,

- Erhalten der Anzahl von Facetten N des Kugelgelenks ausgehen von der Formel:

* 180 - 2$\alpha$ = C x A
* N = C + B
* N x A = 360°
* B > C

wobei

C die Anzahl der Facetten im Winkelabschnitt 2$\alpha$ ist

B die ergänzende Anzahl an Facetten zu C ist

A der Winkel einer Facette ist

$\alpha$ der Winkel zwischen dem Riegel und dem Schloss ist.

N, C und B Ganzzahlen sind.

2. Verfahren nach Anspruch 1, **dadurch gekennzeichnet, dass** es Mittel umfasst, die die Verwendung derselben Übertragungsvorrichtung für die rechte und die linke Fahrzeugtür erlaubt.

3. Verfahren nach Anspruch 2, **dadurch gekennzeichnet, dass** das zuvor genannte Mittel auf der Wahl der Anzahl der Facetten (20) beruht.

4. Verfahren nach einem der Ansprüche 2 oder 3, **dadurch gekennzeichnet, dass** die Anzahl der Facetten in Abhängigkeit vom Winkel ($\alpha$) zwischen dem Riegel und dem Schloss und der Tatsache der Verwendung desselben Übertragungsmechanismus für die linke und die rechte Fahrzeugtür bestimmt ist.

5. Verfahren nach einem der Ansprüche 1 bis 4, **dadurch gekennzeichnet, dass** es eine Verwechslungssicherungsvorrichtung (26, 27) für die Montage an der linken und die rechten Fahrzeugtür umfasst.

6. Verfahren nach Anspruch 5, **dadurch gekennzeichnet, dass** die Verwechslungssicherungsvorrichtung eine Klaue (26), aus einer Facette (20) des Kugelgelenks mit Facetten (18) vorstehend, und zwei Rillen (27) auf der Fläche des Ansatzstücks zur Aufnahme des Kugelgelenks umfasst, die mit letzterem zusammenwirkt, wobei die Klaue dazu bestimmt ist, in die eine oder die andere Rille einzugreifen.

**Claims**

1. A method for manufacturing a movement transmission arrangement between a rotary output member such as a door lock for a motor vehicle and a rotary input member of a mechanism such as a door latch for a motor vehicle, of the type comprising a movement transmission device interposed between the two rotary members and including a transmission shaft, whose two ends, together with the rotary output and input members, constitute hinged transmission joints enabling an axial misalignment, each end having the general shape of a ball joint cooperating with a complementary rotary member portion, the lock-side ball joint (18) of the transmission shaft (17) being a faceted ball joint (20), **characterized in that** it comprises the steps of:

- determining the angle $\alpha$ between the lock (13) and the latch,
- obtaining the number of facets N of the ball joint from the formula:

■ 180 - 2$\alpha$ = C x A
■ N=C+B
■ N x A = 360°
■ B > C

Wherein

C is the number of facets in the angular portion 2$\alpha$

B is the number of facets complementary to C.

A is the angle of a facet

$\alpha$ is the angle between the lock and the latch.

N, C and B are integers.

2. The method according to claim 1, **characterized in that** it includes means allowing to use the same transmission device for right and left doors of the vehicle.

3. The method according to claim 2, **characterized in that** the aforementioned means lies in the selection of the number of facets (20).

4. The method according to any of claims 2 or 3, **characterized in that** the number of facets is determined according to the angle ($\alpha$) between the lock and the latch and the fact of using the same transmission mechanism for the left and right doors.

5. The method according to any of claims 1 to 4, **characterized in that** it comprises a device (26, 27) for foolproofing the mounting on the left and right doors of the vehicle,

6. The method according to claim 5, **characterized in that** the foolproofing device includes a lug (26) protruding from a facet (20) of the faceted ball joint (18) and two grooves (27) in the face of the receiving end-piece of the ball joint cooperating with the latter, the lug being intended to be engaged in either of the two grooves.

Fig. 1

Fig. 2

Fig. 3

Fig. 4

Fig. 5

Fig. 6

Fig. 7

**EP 2 007 957 B1**

**RÉFÉRENCES CITÉES DANS LA DESCRIPTION**

**Documents brevets cités dans la description**

- EP 0943759 A